# EUROPÄISCHE PATENTANMELDUNG

(11) **EP 0 687 890 A2**
(43) Veröffentlichungstag der Anmeldung: **20.12.1995**
(21) Anmeldenummer: 95108421.9
(22) Anmeldetag: 01.06.1995
(51) Int. Cl.: G01B 11/30

(54) **Verfahren zur Eliminierung des Rollwinkels einer Messachse einer Koordinatenmessmaschine sowie Vorrichtung zur Durchführung des Verfahrens**

(30) Priorität: 17.06.1994 DE 4421302
(71) Anmelder: Leitz Messtechnik Gesellschaft mit beschränkter Haftung, D-35578 Wetzlar (DE)
(72) Erfinder: Habermehl, Heinz-Eckhard, Dr., D-36341 Lauterbach (DE)
(74) Vertreter: Knefel, Siegfried, Dipl.-Math.

(57) **Zusammenfassung**

Verfahren zur Eliminierung des Rollwinkels der Meßachse einer Koordinatenmeßmaschine, bei dem zur Eliminierung des Rollwinkelfehlers bei der Verschiebung der Meßachse in ihrer Richtung mit Hilfe eines Laserstrahles eine Bezugsnormale erzeugt wird und die Abweichung der Meßachse aus ihrer Normallage interferometrisch mit Hilfe eines Wollaston-Prismas erfaßt wird. Das Wollaston-Prisma ist mit Hilfe eines Hebels, der rechtwinklig zur Meßachse angeordnet ist, mit der Meßachse fest verbunden. Die Messung wird in zwei Positionen einer zur Meßachse senkrecht stehenden Koordinatenachse vorgenommen.

## Beschreibung

Die Erfindung betrifft ein Verfahren zur Eliminierung des Rollwinkels einer Meßachse einer Koordinatenmeßmaschine bei Verschiebung der Meßachse in ihrer Achsrichtung sowie eine Vorrichtung zur Durchführung des Verfahrens.

Die Meßachse kann sowohl die X-, als auch Y-, als auch Z-Achse sein. Zum vereinfachten Verständnis wird angenommen, daß die Meßachse die Z-Achse ist, also die Pinolenachse der Koordinatenmeßmaschine.

Als Rollwinkel bezeichnet man die Lageabweichung der Pinolenachse von der Z-Richtung, die dadurch entsteht, daß die Pinole bei ihrer axialen Verschiebung in den sie tragenden Lagern verkantet. Die Verkantung ist damit ein einer Koordinatenmeßmaschine anhaftender Fehler.

Die zur Ermittlung der Rollwinkelfehler der Pinole angewendeten Methoden nach dem Stand der Technik zeigen den Nachteil, daß sie entweder zu ungenau und/oder zu aufwendig sind.

Nach einer ersten Methode bildet man die Differenz zweier gegen ein Ebenheitsnormal gemessener Ablagen, und es werden Gleichanteile, die durch translatorische Bewegung der Meßachse in Richtung der Ablage (Nullpunktverschiebung) entstehen, eliminiert. Dieses grundlegende Meßprinzip wird in zwei Varianten realisiert.

Bei beiden Methoden wird als Normal ein Granitstein mit polierter Oberfläche verwendet. Bei der ersten Methode befindet sich an den Enden eines mit der Pinole verbundenen Hebels je ein Längenmeßtaster. Die Längenmeßtaster messen die Abstände der Enden der Hebelarme von der Oberfläche des Steines. Die Längenmeßtaster sind in Differenz geschaltet, und aus ihren Werten kann deshalb der Rollwinkel der Pinole in jeder Verschiebestellung der Pinole längs des Ebenheitsnormales bestimmt werden. Der Vorteil dieser Methode ist, daß die Messung des Rollwinkels in einem Durchlauf erfolgen kann und keine weitere Korrektur einer Achskippung notwendig ist. Der Nachteil dieser Methode ist jedoch der, daß die Steinrauhigkeit und die Ebenheit der Oberfläche des Steines in das Meßergebnis eingeht, daß die Steinbreite die Hebellänge für den Ansatz der Längenmeßtaster begrenzt, und daß damit die Auflösung der gewonnenen Werte, das heißt die erzielte Genauigkeit begrenzt ist. Ferner ergeben sich durch das Schleifen der Taster auf der Oberfläche des Steines beim überfahren des Ebenheitsnormales Fehler infolge der Querempfindlichkeit der Längenmeßtaster.

Nach der zweiten Methode wird mit einer speziellen Tasterkonfiguration in zwei hintereinanderfolgenden Meßläufen ein Ebenheitsnormal, das heißt die Steinoberfläche angetastet. Der Nachteil dieser Methode ist, daß die Messung zeitaufwendig in zwei Durchläufen erfolgen muß, daß die Steinrauhigkeit wiederum in das Meßergebnis eingeht, da es schwierig ist, dieselbe Meßlinie entlangzufahren, und daß durch das Antasten der Oberfläche des Steines sich Antastfehler ergeben, welche zu einer Unsicherheit führen.

Daneben gibt es polarisationsoptische Methoden, die die Eigenrotation der Pinolenachse über eine Signalveränderung erfassen, die durch Drehung eines Analysators zu einem polarisierenden Lichtstrahl entsteht. Für diese Methode kann man auch einen aufwendigen Laserkreisel verwenden.

Eine andere Möglichkeit bietet die Fadenmethode, bei der die Eigenrotation und die Ablage zweier an einem Hebel sitzenden Aufnehmer zu zwei senkrecht aufgrund der Schwerkraft gespannten Drähten bestimmt wird. Bei dieser Methode dienen die Drähte als Normal.

Schließlich wird zur Bestimmung des Rollwinkels der Pinole auch die Zylinderspiegelmethode nach Schieferstein angewandt. Ein Lichtspalt wird hier auf einen an der Achse angebrachten Zylinderspiegel projiziert und die durch die Eigenrotation erzeugte Verschiebung des reflektierten Strahles auf eine Empfängerfläche ermittelt.

Alle diese Methoden wandeln die zu messende Rollbewegung über einen Hebelarm in Längenänderungen um, die erfaßt werden.

Dieses Grundprinzip liegt auch der Erfindung zugrunde.

Aufgabe der Erfindung ist es, ein Verfahren zur Rollwinkelbestimmung einer Achse, zum Beispiel der Achse der Pinole anzugeben, welches eine höhere Genauigkeit für die Eliminierung des Rollwinkelfehlers ergibt, darüber hinaus eine Reproduzierbarkeit verspricht und im Handling einfach ist.

Diese Aufgabe wird durch das Verfahren nach dem Anspruch 1 gelöst.

Diesem Verfahren liegen folgende Gedanken zugrunde:
- Die Meßachse muß immer auf die Verschiebeachse in der kinematischen Kette folgen, das heißt, es muß eine echte Verschiebung der Meßachse vorliegen. Die kinematische Kette ist hierbei die Aufeinanderfolge der angesprochenen Meßachsen, wenn man vom Werkstück über das Tastersystem auf die Maschine übergeht.
- Eigenrotationen der Verschiebeachse müssen berücksichtigt werden.
- Der Hebel muß senkrecht zur Meßachse und parallel zur Verschiebeachse liegen.
- Die Ablage wird orthogonal zur Verschiebe- und Meßachse ermittelt.
- Der Laserstrahl als Gradheitsnormal darf zwischen den Messungen nicht in seiner Richtung verändert werden.

Daher lassen sich nicht nur die Z-Achse (Pinole) messen, sondern auch andere Achsen der Koordinatenmeßmaschine. Lediglich die erste Achse in der kinematischen Kette kann nicht gemessen werden, da vor ihr keine Verschiebeachse liegt. Bei einer 3-Achs-Koordinatenmeßmaschine lassen sich zwei Achsen nach der erfindungsgemäßen Methode messen. Da die erste Achse in der kinematischen Kette immer eine waagerechte Achse ist, kann man ihren Rollwinkel mit einer Richtwaage ermitteln, und sie steht als Verschiebeachse zur Verfügung.

Dadurch, daß jetzt die Tranlsationsabweichung vom Laserstrahl beim Verschieben der Pinole sowohl in einer ersten Stellung als auch in einer zweiten Stellung bezogen auf die Y-Richtung in Abhängigkeit von der Verschiebegröße der Pinole in der Z-Richtung sehr genau erfaßt wird, läßt sich leicht zu jedem Z-Wert der Rollwinkel der Pinole bilden. Diese Werte werden mit Hilfe eines Computers den Z-Werten bei Verschiebung der Pinole in Z-Richtung ein für allemal zugeordnet und gelten für den weiteren Einsatz der so protokollierten Koordinatenmeßmaschine.

Bei der erfindungsgemäßen Methode bleiben sämtliche optischen Elemente einschließlich der den Laserstrahl erzeugenden Einrichtung und der die Verschiebung der Interferenzstreifen erfassenden Einrichtung ortsfest an der Koordinatenmeßmaschine. Lediglich das Wollaston-Prisma wird um die Strecke H, welche der Verschiebung der Pinole aus der ersten Position in die zweite Position in der Y-Richtung entspricht, umgesetzt. Hierfür können an dem mit der Pinole fest verbundenen Hebel vorbereitete Aufnahmen für das Wollaston-Prisma, gegebenenfalls mit weiteren Umlenkeinheiten für den Laserstrahl vorgesehen sein.

Es ist in weiterer Ausgestaltung aber auch möglich, längs des Hebels H beispielsweise eine Schwalbenschwanzführung vorzusehen, längs der das Wollaston-Prisma in seine Endstellungen verschoben und dort festgeklemmt wird.

Die erfindungsgemäße Methode gestattet darüber hinaus, eine eventuelle scheinbare "Auslenkung" der Y-Achse bei Verschiebung der Pinole und des Wollaston-Prismas aus der ersten Stellung in die zweite Stellung auszugleichen, indem zu den ermittelten Translationsabweichungen in der Endposition der Pinole nach dem Umsetzen des Wollaston-Prismas eine entsprechende zusätzliche Y-Korrektur angebracht wird.

Auf der Zeichnung ist ein Ausführungsbeispiel der Erfindung dargestellt, und zwar zeigen:
- Fig. 1: eine Koordinatenmeßmaschine in perspektivischer Ansicht ohne die erfindungsgemäße Meßeinrichtung;
- Fig. 2: eine graphische Darstellung zur Erläuterung der Wirkungsweise;
- Fig. 3: die Meßmaschine der Fig. 1 in Seitenansicht mit den den Rollwinkel ermittelnden Elementen;
- Fig. 4: eine Darstellung zur Erläuterung der Wirkungsweise der Erfindung.

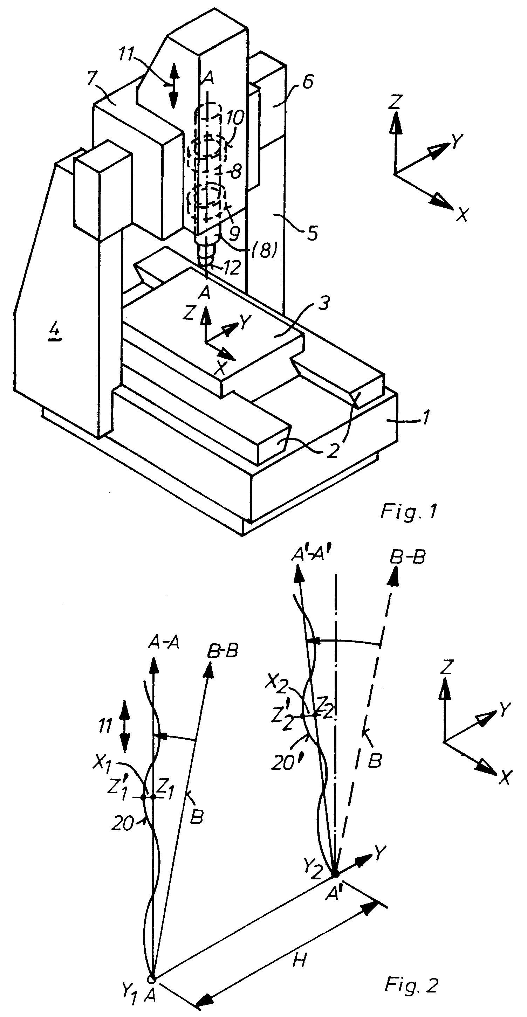

Gemäß der Fig. 1 besteht die Koordinatenmeßmaschine aus einem Grundbett (1), das eine Schwalbenschwanzführung (2) aufweist, längs der ein Tisch (3) in der X-Richtung verschiebbar ist.

An dem Grundbett (1) sind Stützen (4 und 5) angebracht, welche zusammen mit einer Traverse (6) ein Portal bilden. Längs der Traverse (6) ist ein Schlitten (7) in der Y-Richtung verschiebbar. Der Schlitten (7) trägt eine Pinole (8), deren Lage im Schlitten (7) gestrichelt eingezeichnet ist. Die Pinole (8) ist in zwei Lagern (9 und 10) geführt, so daß sie in der Z-Richtung, das heißt in Richtung des Pfeiles (11) verschoben werden kann. Das untere Ende der Pinole (8) trägt einen Taster (12), mit dem ein auf dem Tisch (3) angeordnetes Werkstück (nicht dargestellt) koordinatenmäßig ausgemessen werden kann.

Bei der Verschiebung der Pinole (8) in Richtung des Pfeiles (11) führt die Achse A-A der Pinole in den Lagern (9, 10) Kippbewegungen aus, so daß zum Beispiel ein Achspunkt Z₁ um den Betrag X₁ (Fig. 2) in die Lage Z₁' wandert.

Bei Verschiebung der Pinole in Richtung des Pfeiles (11) verschieben sich die auf der Z-Achse liegenden Punkte jeweils in eine Lage auf der Kurve (20) der Fig. 2. Verschiebt man die Achse A-A der Pinole in Y-Richtung mit Hilfe des Schlittens (7) aus der Position Y₁ in die Position Y₂, nimmt die Achse A-A der Pinole (8) beispielsweise die Lage A'-A' im Raum ein. Bei der Verschiebung der Pinole in die Y₂-Stellung in Richtung des Pfeiles (11) wandern wiederum die Achspunkte, zum Beispiel der Punkt Z₂ nach Z₂' um den Betrag X₂ aus. Diese Auswanderung ergibt eine Kurve (20'), welche mit der Kurve (20) üblicherweise nicht übereinstimmt.

Die Kurven (20 und 20') der Translationsabweichungen verkörpern den Rollwinkel der Achse A-A der Pinole bei Verschiebung der Pinole in Z-Richtung, und zwar in den beiden Stellungen Y₁ und Y₂.

Um diese Rollwinkel ist der Meßwert beim Antasten eines auf dem Tisch (3) angeordneten Werkstückes mit Hilfe eines Tasterhebels jeweils in Abhängigkeit von der Verschiebungsgröße Z zu korrigieren.

Hierzu ist es erforderlich, die Größe des Rollwinkels für jeden Wert Z zu bestimmen, um den Meßwert beim Antasten des Werkstückes mit diesem Wert korrigieren zu können, das heißt, eine Eliminierung der Rollwinkel bei der Messung durchzuführen.

Gemäß Fig. 3 ist hierzu am Grundbett (1) eine einen Laserstrahl erzeugende Einrichtung (30) vorgesehen. Der Laserstrahl (31) wird über ein den Strahl rechtwinklig umlenkendes Prisma (32) in die Z-Richtung, das heißt senkrecht nach oben, das heißt parallel zur Sollage der Meßachse ab Bezugsnormale (B-B) umgelenkt.

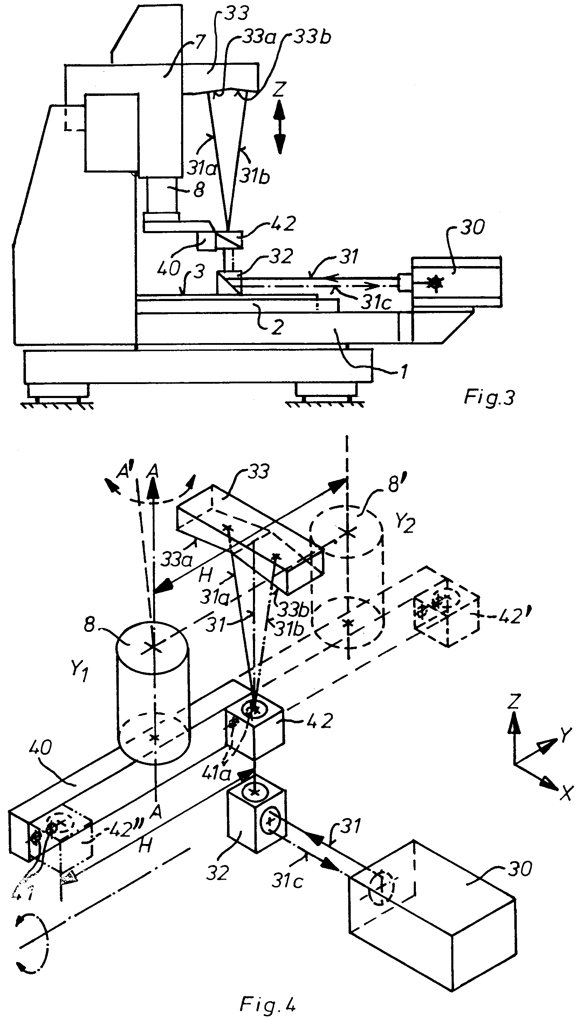

An der Pinole (8) ist ein senkrecht zur Zeichenebene liegender Hebel (40) rechtwinklig befestigt (siehe auch Fig. 4). Der Hebel (40) ist beidseitig zur Pinole (8) (Fig. 4) angeordnet. Der Hebel (40) trägt an seinen Enden im Abstand H voneinander Aufnahmen (41, 41a). In die Aufnahme (41) oder die Aufnahme (41a) ist ein Wollaston-Prisma (42) wahlweise einsetzbar. Beim Umsetzen des Wollaston-Prismas ist dieses also um die Strecke H längs des Hebels (40) versetzt worden. Die Pinole (8) und der Hebel (40) werden deshalb aus der Stellung Y₁ in die Stellung Y₂ um die Strecke H verschoben, so daß der im Prisma (32) umgelenkte Laserstrahl (31) wiederum das Wollaston-Prisma (42) durchsetzt.

Im Wollaston-Prisma (42) wird der Laserstrahl (31) in die beiden kohärenten Teilstrahlen (31a und 31b) aufgespalten. Die Teilstrahlen (31a und 31b) treffen auf Reflexionsflächen (33a und 33b) eines maschinenfesten Translationsreflektors (33). Dieser kann auch auf dem Tisch liegen, und ein am Hebel (40) angebrachter Umlenkspiegel lenkt die Strahlen (31a, 31b) auf diesen. Die Reflexionsflächen (33a und 33b) sind winkelmäßig so zueinander ausgerichtet, daß sich ihre Flächen in der Y-Richtung schneiden und die Teilstrahlen (31a und 31b) in das Wollaston-Prisma auf demselben Weg zurücklenken.

Die überlagerten kohärenten Lichtstrahlen (31c) treffen nach Umlenkung im Prisma (32) auf eine Empfängereinheit (nicht dargestellt), die in der Laserstrahl erzeugenden Einrichtung (30) integriert ist.

Dreht die Achse A-A gemäß Fig. 2, dann kippt der Hebel (40) und lenkt das am Hebel (42) befestigte Wollaston-Prisma entsprechend aus. Die Teilstrahlen (31a und 31b) werden jetzt in ihrer Richtung um einen entsprechenden Winkel ausgelenkt. Sie treffen jetzt nicht mehr winkelgleich nach ihrer Reflexion am Translationsreflektor (33) im Wollaston-Prisma (42) zusammen. Mit anderen Worten, ihre Weglängen sind ungleichmäßig lang geworden, so daß die überlagerten Teilstrahlen (31c) interferieren. In der Empfängereinrichtung kann deshalb eine entsprechende Auswanderung, beispielsweise von erzeugten Interferenzstreifen, ermittelt werden.

Der Laserstrahl bildet somit gemäß Fig. 2 eine Bezugsnormale B-B, beispielsweise in der Position Y₁. Verschiebt man die Pinole (8) in Richtung des Pfeiles (11), erhält man mit Bezug auf die Bezugsnormale B-B eine zu jedem Z-Wert gehörende Abweichung X₁, welche in einem Computer (nicht dargestellt) protokolliert wird.

Nunmehr verschiebt man die Pinole (8) in die Lage (8') der Fig. 4. Hierbei wandert das Wollaston-Prisma (42), da es über den Hebel (40) fest mit der Pinole (8) verbunden ist, nach rechts aus dem Laserstrahl aus, das heißt in die Lage (42'). In dieser Stellung wird das Wollaston-Prisma (42) aus der Aufnahme (41a) des Hebels (40) herausgenommen und in die links am Hebel (40) vorgesehene Aufnahme (41) gesetzt, das heißt in die Lage (42''), so daß sich das Wollaston-Prisma wiederum in einer Lage befindet, in der der Laserstrahl (31) mit der Achse des Wollaston-Prismas zusammenfällt. In dieser Stellung wird eine erneute Messung durch Verschieben der Pinole in Richtung des Pfeiles (11) durchgeführt, und man erhält jetzt zu jedem Z-Wert einen Translationswert X₂.

Subtrahiert man den Wert X₁ vom Wert X₂, kann für jeden Z-Wert die Rollwinkelkorrektur der Koordinatenmeßmaschine ermittelt werden. Diese Rollwinkelkorrektur kann computermäßig erfaßt und gespeichert werden und für jeden beim Antasten des Werkstückes ermittelten Z-Wert zur Korrektur dieses Wertes herangezogen werden.

Bei der Verschiebung der Pinole (8) in der Y-Richtung, das heißt aus der Lage (8) in die Lage (8') der Fig. 4, kann es vorkommen, daß durch den Schlitten (7) bedingt eine Y-Korrektur vorzusehen ist, indem sich die Normallage der Meßachse A-A (Fig. 2) in die Lage A'-A' bewegt hat. Die hierdurch an die Rollwinkel anzubringenden Korrekturen können leicht ermittelt werden, und zwar aus der jeweiligen Abweichung der Winkelgröße vom Laserstrahl B-B. Diese Winkelabweichung bewirkt eine von Z linear abhängige Korrektur der Z-Werte.

Der Hebel (40) dient dazu, die Winkelabweichungen der Pinolenachse auf das Wollaston-Prisma (42) zu übertragen und die Auswanderung zu vergrößern. Bildet man eine Hebellänge von H = 206,3 mm, so entspricht eine Abweichung von 1 µm einem Rollwinkel von einer Winkelsekunde. Durch Verlängern der Hebellänge H läßt sich die Auflösung erhöhen. Theoretisch ist eine maximale Hebellänge möglich, die der maximalen Verschiebung der Pinole (8) in der Y-Richtung entspricht.

Der Laserstrahl darf zwischen den beiden Messungen nicht in seiner Richtung verändert werden.

Die Auswanderung der Y-Achse bei Verschiebung der Pinole in die Meßstellungen kann mit Hilfe einer Richtwaage oder mit Hilfe der der Koordinatenmeßmaschine zugeordneten, bekannten Korrekturen leicht bestimmt werden. Hierzu ist es erforderlich, die Lage der Y-Achse in der Stellung der Pinole (8) und in der Stellung der Pinole (8') zu messen und miteinander zu vergleichen.

### Bezugszahlen

- 1: Grundbett
- 2: Schwalbenschwanzführung
- 3: Tisch
- 4: Stütze
- 5: Stütze
- 6: Traverse
- 7: Schlitten
- 8: Pinole
- 8': Lage der Pinole
- 9: Lager
- 10: Lager
- 11: Pfeil
- 12: Taster
- 20: Kurve
- 20': Kurve
- 30: Laserstrahl erzeugende Einrichtung
- 31: Laserstrahl
- 31a: Teilstrahl
- 31b: Teilstrahl
- 31c: überlagerte Teilstrahlen
- 32: Prisma
- 33a: Reflexionsfläche
- 33b: Reflexionsfläche
- 33: Translationsreflektor
- 40: Hebel
- 41: Aufnahme
- 41a: Aufnahme
- 42: Wollaston-Prisma
- 42': Lage des Wollaston-Prismas
- 42'': Lage des Wollaston-Prismas
- A-A: Meßachse/Achse der Pinole
- A'-A': Achslage
- B-B: Bezugsnormale (Laserstrahl)
- X₁: Differenz
- X₂: Differenz
- Y₁: Lage der Pinolenachse
- Y₂: Lage der Pinolenachse
- Z₁': Kurvenpunkt
- Z₂': Kurvenpunkt

## Patentansprüche

1. Verfahren zur Eliminierung des Rollwinkels einer Meßachse einer Koordinatenmeßmaschine,
**dadurch gekennzeichnet,** daß ein ortsfester Laserstrahl (31) in Richtung der Meßachse A-A über ein mit der Meßachse A-A mittels eines senkrecht zur Meßachse angeordneten Hebels (40) fest verbundenes Wollaston-Prisma (42) geführt wird, daß die das Wollaston-Prisma (42) verlassenden, unter einem Winkel zueinander geneigten kohärenten Teilstrahlen (31a, 31b) an den Spiegelflächen (33a, 33b) einer gerätefesten Umlenkeinheit (Translationsreflektor (33)) zum Wollaston-Prisma (42) zurückgelenkt und nach Verlassen des Wollaston-Prismas (42) zur Interferenz gebracht werden, daß die Meßachse A-A in ihrer Längsrichtung verschoben wird und die zu jeder Position gehörende translatorische Abweichung zum Laserstrahl B-B interferometrisch erfaßt und protokolliert wird, daß die Meßachse A-A parallel zu sich selbst in eine zweite Position A'-A' gefahren wird und das Wollaston-Prisma (42) derart am Hebel (40) umgesetzt wird, daß der Laserstrahl (31) wiederum durch das Wollaston-Prisma (42) tritt, daß die Meßachse A'-A' in der zweiten Stellung erneut in der Meßachsenrichtung A'-A' verschoben wird und die translatorische Abweichung von dem Laserstrahl B-B in Abhängigkeit von der Verschiebegröße ermittelt und protokolliert wird, daß die Translationswerte der ersten und zweiten Position der Meßachse in Abhängigkeit von den Werten der Verschiebegröße der Meßachse in Meßachsenrichtung voneinander subtrahiert werden und die Differenzwerte den gemessenen Werten überlagert werden und aus diesen Werten über die Hebellänge unter Berücksichtigung der Meßachsenkippung bei Verschiebung zwischen den zwei Messungen der Rollwinkel ermittelt wird.

2. Verfahren nach Anspruch 1, dadurch gekennzeichnet, daß in der zweiten Position der Meßachse eine durch die Verschiebung bedingte scheinbare Lageänderung der Meßachse bei ihrer Parallelverschiebung bei der Ermittlung der Rollwinkel berücksichtigt wird.

3. Vorrichtung zur Durchführung des Verfahrens nach Anspruch 1, dadurch gekennzeichnet, daß an der Meßachse rechtwinklig zur Meßachse ein beiderseits zur Meßachse liegender Hebel (40) befestigt ist, an dessen Enden Aufnahmen (41) für die Befestigung des Wollaston-Prismas (42) in der ersten und zweiten Position der Meßachse vorgesehen sind.

4. Vorrichtung nach Anspruch 3, dadurch gekennzeichnet, daß der Hebel (40) eine Führung aufweist, längs der das Wollaston-Prisma (42) in die erste und zweite Position verschiebbar ist.

5. Vorrichtung nach Anspruch 4, dadurch gekennzeichnet, daß die Führung schwalbenschwanzförmig ausgebildet ist.

6. Vorrichtung nach Anspruch 3, dadurch gekennzeichnet, daß der Laserstrahl (31) in einer Ebene senkrecht zur Meßachse erzeugt wird und auf einen gerätefesten Umlenkspiegel (32) trifft, der ihn in die Soll-Richtung der Meßachse umlenkt.

7. Vorrichtung nach Anspruch 6, bei der die Meßachse die Z-Achse (Pinolenachse) ist, dadurch gekennzeichnet, daß die den Laserstrahl erzeugende Einrichtung (30) den Laserstrahl (31) in der X-Richtung zum Umlenkprisma (32) sendet und die Schnittlinie der Reflexionsflächen (33a, 33b) des Translationsreflektors (33) in der Y-Richtung liegt.

8. Vorrichtung nach Anspruch 3, dadurch gekennzeichnet, daß die den Laserstrahl erzeugende Einrichtung (30) und die die überlagerten kohärenten Teilstrahlen empfangende Vorrichtung sowie das Umlenkprisma (32) und die Reflexionsflächen (33a, 33b) des Translationsreflektors (33) ortsfest angeordnet sind.
